# EUROPEAN PATENT SPECIFICATION

(11) **EP 0 482 050 B1**
(45) Date of publication and mention of the grant of the patent: **27.03.1996**
(21) Application number: 90910796.3
(22) Date of filing: 11.07.1990
(51) Int. Cl.: H04Q 7/22, H04B 7/26

(54) **CELLULAR RADIO SYSTEM**
ZELLULARES FUNKSYSTEM
SYSTEME RADIO CELLULAIRE

(30) Priority: 11.07.1989 GB 8915863
(43) Date of publication of application: 29.04.1992
(73) Proprietor: TELECOM SECURICOR CELLULAR RADIO LIMITED, London SE1 1DS (GB)
(72) Inventor: BAJWA, Anwar, Gillingham, Kent (GB)
(74) Representative: Buttrick, Richard
(86) International application number: GB9001068
(87) International publication number: WO9101073

(56) References cited:
- EP-A- 0 145 098
- EP-A- 0 150 399
- INTERNATIONAL SWITCHING SYMPOSIUM March 87, PHOENIX (US) pages 759 - 765; P. ROBERT et al: "Alcatel land mobile system CD900. A fully digital cellular approach using wideband TDMA".
- IEE PROCEEDINGS vol. 136, no. 1, February 89, STEVENAGE HERTS, (GB) pages 75 - 80; S. Heeralall et al.: "High capacity cellular patterns for land mobile radio systems using directional antennas".
- 36TH IEEE VEHICULAR TECHNOLOGY CONFERENCE May 86, DALLAS (US) pages 334 - 341; K: IMAMURA et al: "Mobile Communication Control using Multi-transmitter Simul/Sequential Casting (MSSC) ".

## Description

The present invention relates to a cellular radio system, and in particular, though not exclusively to a cellular system using time division multiple access (TDMA).

In a cellular radio system, mobile stations are served by a number of fixed stations, known as base sites or stations. Each base station serves a limited area or cell using a selected range of radio frequencies. By this means, non-adjacent base stations can re-use radio frequencies, thus efficiently using the radio spectrum. It is common to subdivide each cell into sectors, with each sector in a cell being served by one or more radio channels on a different frequency or group of frequencies to the rest of the sectors within the cell. With time division multiple access (TDMA) radio system allocation of the radio channels is complicated because a number of channels have a common carrier, i.e. the same radio frequency. For example, nine carriers might each have eight radio channels and when these are allocated to a typical cell having six sectors, some sectors have two carriers of sixteen channels while others have a single carrier and eight channels. This would result in an uneven distribution of radio coverage within the cell. This is clearly undesirable.

It is known (see International Switching Symposium, March 1987: Phoenix US page 759-765: Robert et al) to provide a cellular radio system, comprising: a plurality of base stations, each base station having one or more radio frequencies allocated thereto, so that adjacent cells have base stations with different allocated frequencies; at least one cell being subdivided into at least two sectors, the base station of that cell having means for providing each sector of the cell with separate radio coverage by the allocation of time slots to each sector. This allows a more even distribution but makes no provision for changes in the distribution of demand, resulting in overcapacity in the network as a whole.

The present invention seeks to provide a cellular radio system suitable for TDMA or TDMA-like communication, with more efficient radio coverage between sectors of a cell.

According to one aspect of the invention there is provided a cellular radio system, comprising: a plurality of base stations, each base station having one or more radio frequencies allocated thereto, so that adjacent cells have base stations with different allocated frequencies; at least one cell being subdivided into at least two sectors, the base station of that cell having means for providing each sector of the cell with separate radio coverage by the allocation to each sector of time slots of each burst of radio communication on one or more of the radio frequencies allocated to the base station of that cell, and characterized in that the base station of a sectored cell has means for sharing time slots between different sectors, so that time slots can be demand assigned to the sectors.

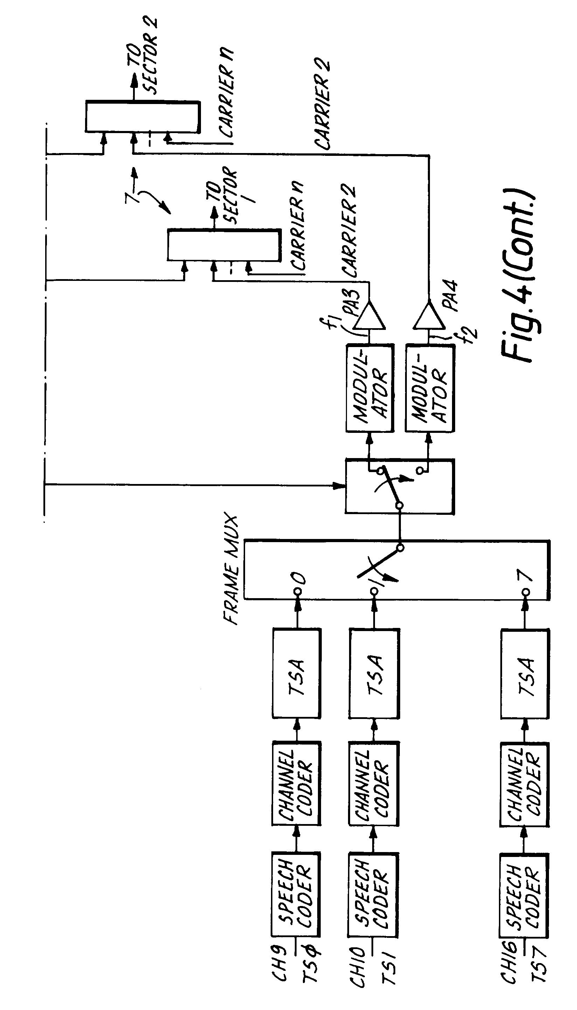

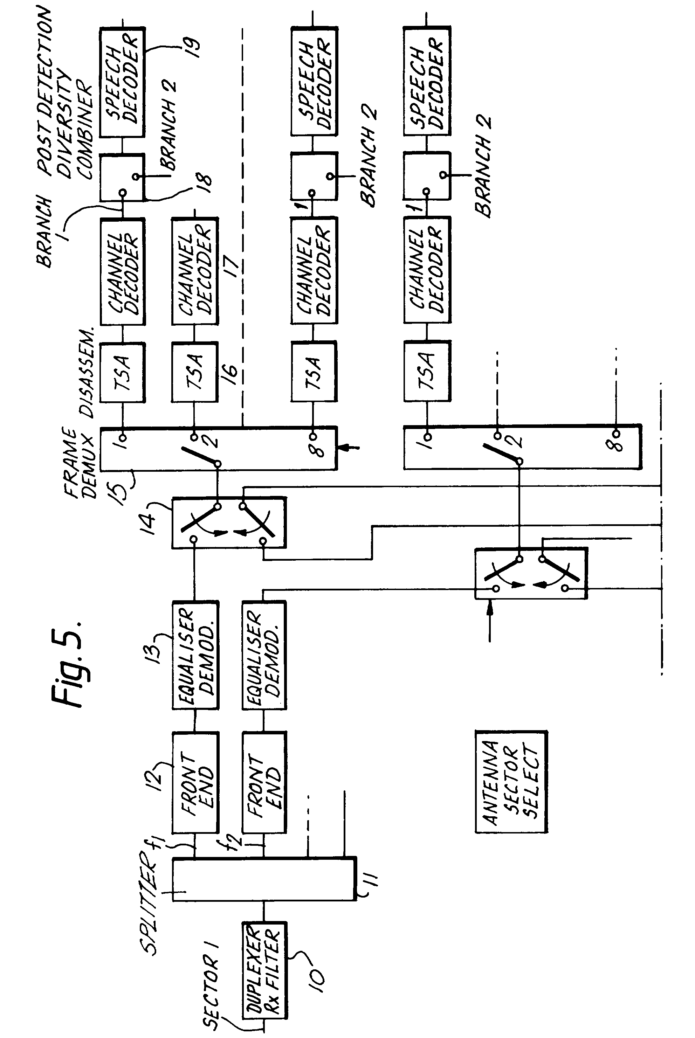

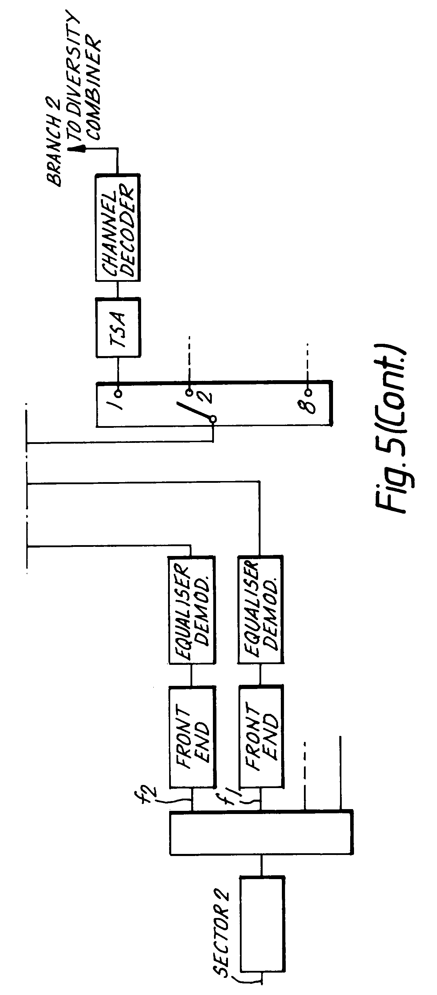

According to another aspect of the invention a cellular radio system comprises: a plurality of base stations, each serving a cell sub-divided into a plurality of sectors; each base station having a transceiver (Fig 4, 5) for time division multiple access (TDMA) communication with a plurality of time slots in each burst of communication on one or more radio frequencies allocated to the base station, a base station having means for serving a plurality of sectors of its cell, each sector using a different allocation of time slots, characterised by the base station having means for selectively enabling the transceiver to allocate time slots to sectors within each burst of TDMA communication so that the base station can dynamically allocate the time slots between sectors.

According to another aspect of the invention there is provided a method of operating a base station of a cell of a cellular radio system, comprising: allocating, on one or more radio frequencies allocated to the base station, bursts of radio communication, each having a plurality of time slots, to at least two sub-divisions of the cell, and characterised by dynamically allocating the time slots of each burst of radio communication between the sub-divisions of the cell, so that time slots within a burst are shared between the cell subdivisions on the basis of demand.

According to another aspect of the invention there is provided a method of operating a base station of a cell of a cellular radio system having one or more radio frequencies allocated thereto, so that adjacent cells have base stations with different allocated frequencies; the cell being subdivided into at least two sectors, each sector of the cell being provided with separate radio coverage by the allocation of time slots to each sector and characterized in that time slots of a burst of radio communication on one or more of the radio frequencies allocated to the base station of sectored cell are shared between different sectors of the cell so that time slots can be demand assigned to the sectors.

A preferred embodiment of the invention will be described by way of example and with reference to the accompanying drawings wherein:
Figure 1 is a cell plan for a repeat having 3 site, and 60° sectors,
Figure 2 is a plan showing a 9 cell layout for a 3 site repeat.
Figures 3a and 3b are cell plans
Figure 4 is a TDMA transmitter of an embodiment of the invention.
Figure 5 is a TDMA receiver of an embodiment of the invention.

The description of the preferred embodiment is divided between a description of a cell plan for a cellular radio system and details of an implementation of a base-site transceiver. The description uses, where appropriate, terminology consistent with the Group Speciale Mobile (GSM) Standard for digital cellular radio.

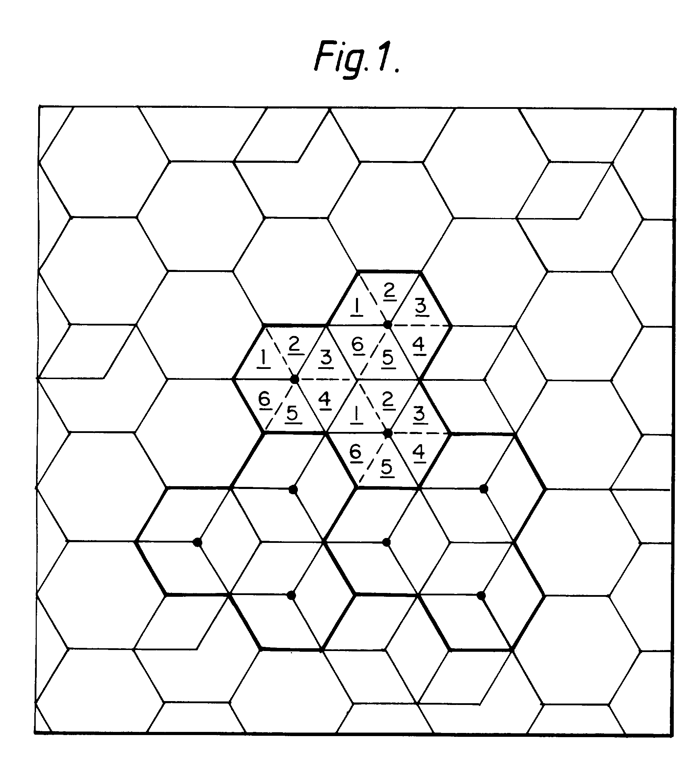

The plan is illustrated for a 3 site 120° cell arrangement with 60° sectors. The cellular re-use plan described here employs the dynamic allocation of channels in a TDMA system over two adjacent sectors defining a composite cell coverage. The approach may be generalised to cells with, say, 4 or more sites etc, and with other cell and sector coverage patterns. The term cell here refers to a composite of two or more sectors. The sites are arranged on a regular grid and each cell is realised by illuminating the sectors with 60° sector antennas. The two adjacent sectors are paired together, therefore sectors 1 and 2, sectors 3 and 4 and sectors 5 and 6 constitute cells 1, 2 and 3 respectively. This arrangement is depicted in Figure 1 in a 3 cell repeat pattern with 9 cells in total. The two 60° sectors on each cell are fully synchronised, this is possible because the equipment will be co-located. The provision of the synchronisation of the adjacent sectors enables switching of time slots dynamically between the sectors.

The carriers available (dependent on carrier spacing allowed in the TDMA scheme) are arranged in 9 carrier groups, one group per cell. The groups may be subdivided into 18 subgroups, each associated with a 60° sector. In each cell one carrier is designated as a control channel (BCCH, in GSM terminology) carrier but requires only the provision of one time slot in a typical TDMA system. In this case 9 BCCH carriers are required, each confined, by convention, to time slot 0(TS0). The coverage of the BCCH extends over the cell i.e. two adjacent 60° sectors.

The time slots on the carriers, and including those remaining on the BCCH carrier, are demand assigned on each sector or over both sectors simultaneously. In some applications a partial fixed assignment per sector may be preferred with the remaining channels (time-slots) being demand assigned on one or both sectors. In order to preserve the cell directionality, and hence C/I, carriers may be grouped on preferred individual sectors, if demand allows. In the absence of this constraint, the plan is still operable with a performance approaching the 9 cell 120° sector plan in the worst case. However, the plan described here will always perform better since the interferers in carrier deployments outside a particular sector and wanted signals are not necessarily harmonised. Thus the expected C/I protection is better than the conventional 9 cell 120° cell plan. Typically, the C/I improvement for uniform traffic load carries between 2 and 3 dB and depends on propagation model assumptions.

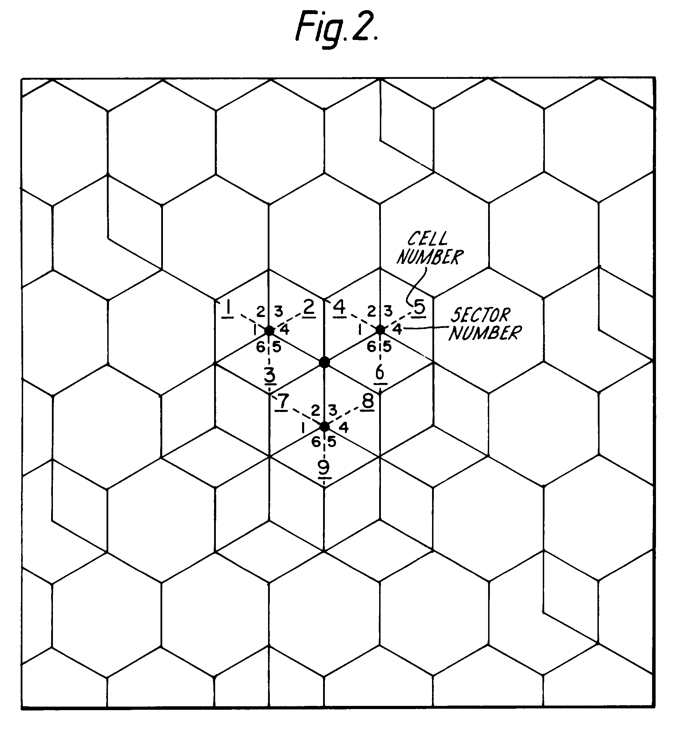

The carrier assignments (allowing dynamic time slot assignment between sectors) for a 3 site 120° plan requires a minimum of 9 TDMA carriers. Multiples of 9 carriers will -uniformly populate all cells on all the sites. In practical cases the spectrum availability may not allow such uniform capacity deployment. An intermediate number of carriers (N) may be available, gradually more being released as spectrum blocks are reallocated. The conventional plan will exaggerate this due to uneven trunking efficiency. In the dynamic assignment of time-slots this capacity is more evenly spread, but not exactly uniformly on all cells and sites. In practice the offered capacity is expected to respond to traffic demand and this plan will respond-accordingly. The capacity imbalance diminishes as the number of available carriers increases. To illustrate the assignment we consider a system evolving from N=12 carriers to N=62 carriers. The calls are arranged and labelled as shown in Figure 2. The frequency assignments are listed in Table 1.

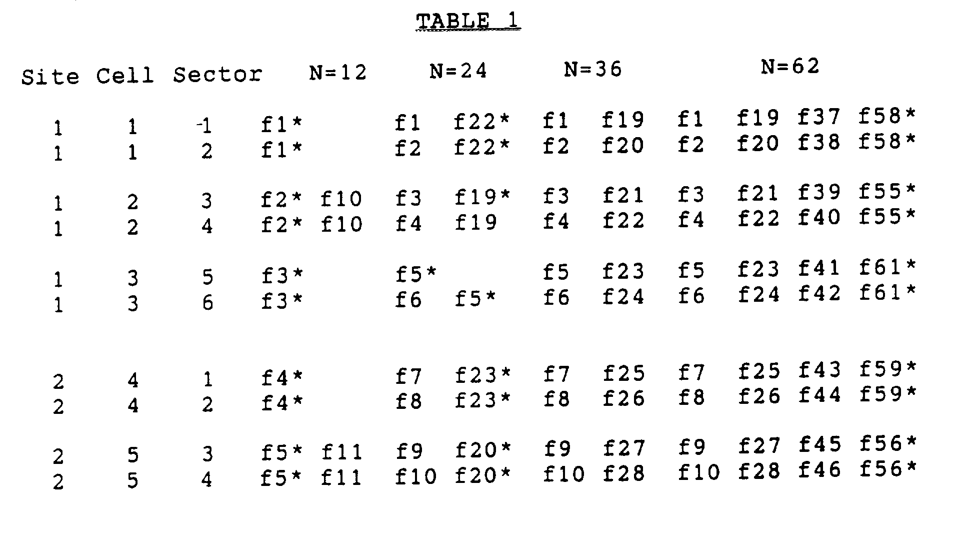

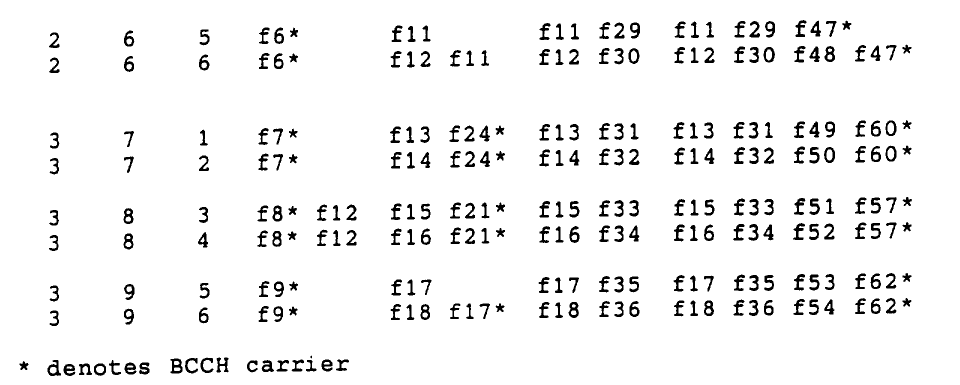

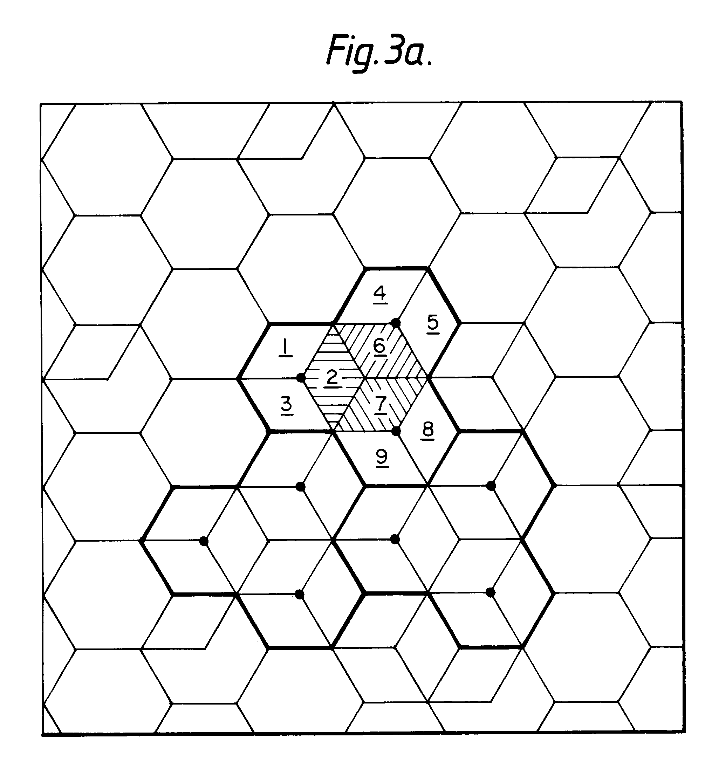

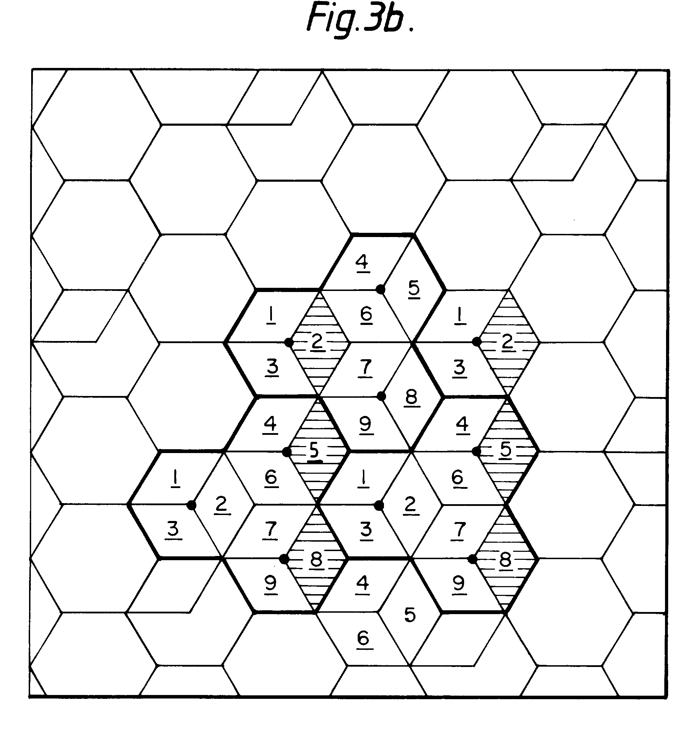

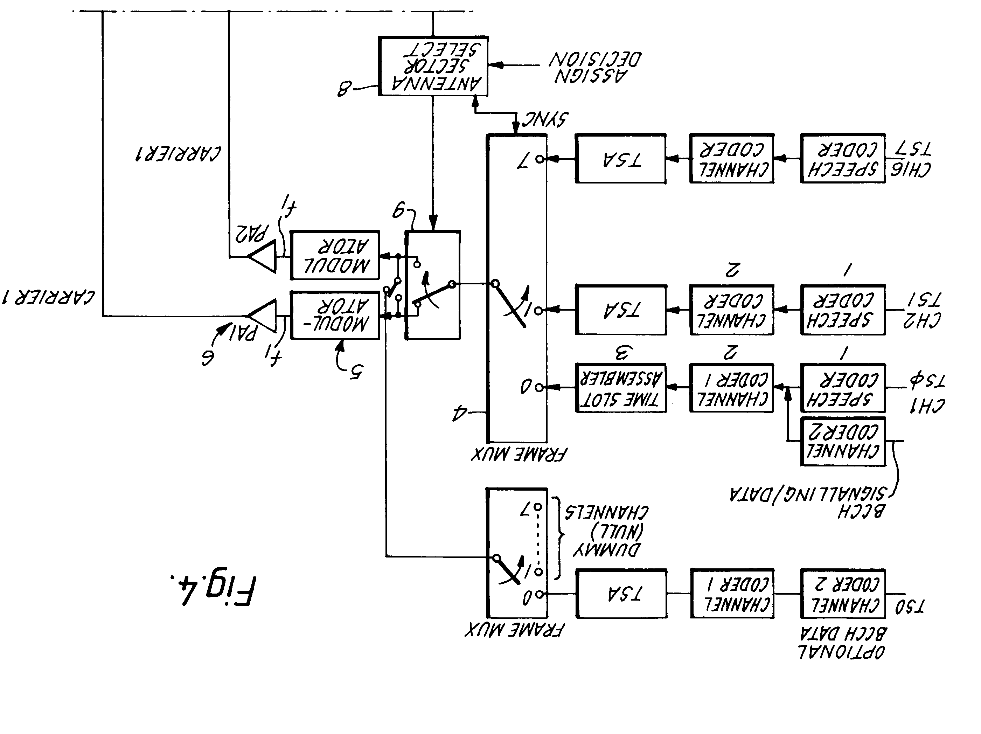

A particular point to note is the assignment when N is not an exact multiple of y. In this case the frequencies are assigned in a special way to illuminate selected 120° cells, with the possibility that this coverage may extend beyond each of these cells so that early hand-ins to the cell provisioned with an extra carrier may occur. Similarly late hand-offs will be arranged from this cell. This gives a smooth handling of peak load in the relatively depleted cells through the use of a cell extended in coverage for this particular carrier. To achieve this the cells are grouped in the sets (2, 6, 7), (1, 5, 9) and (3, 4, 8). Thus, for example, a frequency assigned to cell number 2 may extend into cells 6 and 7. This is shown diagrammatically in Figure 3 where the cells provisioned with extra carriers are shaded. It should be noted that this arrangement maintains the directionality of the co-channels to still protect C/I performance.

The designation of the BCCH/CCCH carrier (shown by asterisks in Table 1) is on each 120° cell via the individual 60° sectors. In the usual case the BS Identity Code (BSIC) and BCCH parameter data is identical on both the 60° sectors. It is possible to arrange for different BSIC and BCCH parameters on each 60° sector with the same or different carrier frequencies, the latter in e.g. the N=36 case. The base station distinguishes the mobile's response on the uplink on the signals on the two adjacent sectors in each cell.

The plan described exploits the directionality of the sector antennas to obtain better co-channel interference and the dynamic assignment of channels across the adjacent sectors to achieve higher trunking efficiency compared to that obtainable over each sector. The plan is flexible to traffic demand and simple to implement. Frequency assignments take full account of the control channel requirements and the evolutionary path required of practical plan in response to release of spectrum. The plan is generalised to all repeat patterns on a regular grid and can apply to synchronised or non-synchronised BS networks with and without frequency hopping capability. However, it requires the synchronisation of all cells that share the same site i.e collocated cells.

Advantageous features of the plan are:
i) Carrier-to-interference (C/I ) ratio protection achievable is better than a cell plan based on conventional cells equivalent in coverage to the two adjacent sectors.
ii) Trunking efficiency is higher than a plan based on sectors and equivalent dynamically to the conventional cell with coverage defined over two adjacent sectors.
iii) The plan is flexible and requires little or no change to accommodate increased spectrum availability.
iv) It is traffic demand orientated and steers capacity where needed most. Better trunking efficiency is possible on sparse sectors with an attractive peak load handling characteristics.
v) The re-use plan is simple to realise in hardware, particularly if a baseband switching of sectors is implemented.
vi) The re-use for the control channels e.g. the Broadcast Control Channel (BCCH) or its equivalent is handled in a regular repeat consistent with the traffic channels repeat pattern. Therefore control channel and traffic channel designations are interchangeable, except for the provision of BCCH simultaneously over the two adjacent sectors. The baseband antenna selection makes this easy to do in the resource assignment procedures.
vii) Frequency Hopping and Base Station (BS) antenna diversity are easily accommodated.
viii) The plan is fully compatible with cellular plans based on the sector deployment grid e.g., the plan adapts naturally to the 60' sector plans used in certain analogue cellular systems.

In a network with synchronised base stations the frequency assignment of carriers can be more flexible. The dynamic assignment of partially loaded carriers (vacant time-slots) can be managed by the mobile Switching Centre (MSC) or the Operation and Maintenance Centre (OMC). In this case, for example the spare channels on cell 2 can be assigned on a time-orthogonal basis to cells 6 and 7. Due to the synchronised nature of the interference this will not affect the carrier partially assigned in cell 2. However, it will affect the C/I with the corresponding co-channel groups.

A description will now be given of an implementation of a transceiver (transmitter/receiver) for a base site serving a two sector cell.

A particular embodiment for the transmitter is shown in Figure 4. Baseband switching anaLogous to that required in slow frequency hopping in the GSM digital cellular system is used here.

A traffic channel (speech on data) is source encoded, if necessary, by speech coder 1. Channel coding is provided by channel coder 2 as required and depends on the channel type e.g speech, data, signalling control. The rates at which the source encoding occurs is different to the channel coding rate. The channel coding rate is adapted to the time slot (burst) rate, as required by the number of channels multiplexed on a carrier, and time slot assembler 3 organises the coded data into a time slot structure (including provisions like guard, tail and equaliser training bits as required). The TDMA time slots are then multiplexed by frame multiplexer 4 under synchronisation control to form a frame according to the channel type, or its sub-multiplexed form e.g. the sub-multiplexed of the BCCH/CCCH on to time slot number 0 on the BCCH carrier. Antenna select 8 enables transmitter selection switch 9 on the basis of an assignment decision to provide time slots to the appropriate transceiver section for the intended sector of the timeslot. Each section has a modulator and power amplifier 6 to individually feed each sector antenna combiner 7. The transmitter combiner 7 is capable of combining more than two carriers, the combiner loss depending on the combiner type.

A difference between the present embodiment and the realisation for a 120' cell conventional plan is the provision of feeds via separate modulator and power amplifier to the 60° sector antennas for the transmitter. The antenna selection rate may be chosen according to the hardware design and technology constraints. The maximum rate permissible is the time-slot rate (26/15 kHz in the Pan European digital cellular system).

In the present embodiment there are no significant requirements, other than the provision of a modulator and power amplifier per sector. The baseband functions embodied in the base station transceiver are required in a standard transceiver. The antenna selection is implemented using simple logic circuitry at baseband or through address selectable memory. Channels are directed into the appropriate sectors according to a memory map depending on the channel type, submultiplexing and decision criteria for the antenna selection. Therefore the implementation of the transceiver 4 and modulator 5 makes no greater demands than that required by a frequency hopping transceiver.

One particular point to note is the submultiplexing of the BCCH in time slot number 0 (TSO) on both the 60° sectors. The switch labelled S2 directs the BCCH to both sectors simultaneously in the simple implementation. If the BCCH data is set differently an additional branch (excluding 1) is arranged identical to the TSO but with a frame multiplexer with dummy (null) channels on TS1, 2,... 7, except on TSO. This is then simultaneously directed to the sector not selected for TSO on the BCCH carrier by the antenna select switch.

The receiver is illustrated for sectors 1 and 2 in Figure 5. A duplexer (10) may be used to share the antenna for transmitting and receiving directions. The RF splitter (11) is broadband and may be arranged to feed a bank of front ends (preselections) with down converters to select the RF carrier for each equaliser demodulator (13).

In the embodiment shown it is possible to use the signal on the alternate sector to implement antenna diversity (post detection combining is illustrated). The antenna select switch (14) is a double pole switch synchronised to the transmitter selection switch. The switch directs the demultiplexed (15) frame time slots to the Time Slot Disassembler (16) and then to the channel decoder. Dual diversity combining (18) leads to the speech decoder (19) (for speech traffic) and to the data memory for signalling and data transmission.

This embodiment is easily generalised for other TDMA systems and does not necessarily require the provision of frequency hopping. It applies to all types of channels e.g speech, data etc. The illustration shows the case for a traffic channel bearing speech information. Within the constraints of the channel multiplexing for traffic and control channels, there are no additional requirements in this realisation.

## Claims

1. A cellular radio system, comprising: a plurality of base stations, each base station having one or more radio frequencies allocated thereto, so that adjacent cells have base stations with different allocated frequencies; at least one cell being subdivided into at least two sectors, the base station of that cell having means for providing each sector of the cell with separate radio coverage by the allocation to each sector of time slots of each burst of radio communication on one or more of the radio frequencies allocated to the base station of that cell, and characterized in that the base station of a sectored cell has means for sharing time slots between different sectors, so that time slots can be demand assigned to the sectors.

2. A cellular radio system as claimed in claim 1 wherein a cell has at least two pairs of sectors, having means for sharing time slots between each pair of sectors within an allocated burst of radio communication, so that each time slot can be dynamically allocated to one or other sector of the pair.

3. A cellular radio system as claimed in claim 1 or 2 wherein there is at least one base site where there are three base stations each serving a cell of a pair of sectors.

4. A cellular radio system as claimed in Claim 1, 2 or 3 wherein a frequency allocation repeat pattern is arranged on the basis of a cluster of three base sites each having three cells each having a pair of sectors, so that the available frequencies are allocated between nine cells of two sectors each.

5. A cellular radio system as claimed in claim 4 wherein selected of the nine cells of the cluster of base sites are allocated proportionately more frequencies.

6. A cellular radio system as claimed in claim 5 having means for arranging handover, the handover protocols of the system being configured so that the selected cells with more allocated frequencies are favoured for handling calls.

7. A cellular radio system comprising: a plurality of base stations, each serving a cell sub-divided into a plurality of sectors; each base station having a transceiver (Fig 4, 5) for time division multiple access (TDMA) communication with a plurality of time slots in each burst of communication on one or more radio frequencies allocated to the base station, a base station having means for serving a plurality of sectors of its cell, each sector using a different allocation of time slots, characterised by the base station having means for selectively enabling the transceiver to allocate time slots to sectors within each burst of TDMA communication so that the base station can dynamically allocate the time slots between sectors.

8. A cellular radio system as claimed in Claim 7 wherein the transceiver of the said base station has respective transceiver equipment (7) for each sector being served, and the enabling means has means (9) for selectively baseband switching time slots between the transceiver equipments.

9. A method of operating a base station of a cell of a cellular radio system, comprising: allocating, on one or more radio frequencies allocated to the base station, bursts of radio communication, each having a plurality of time slots, to at least two sub-divisions of the cell, and characterised by dynamically allocating the time slots of each burst of radio communication between the sub-divisions of the cell, so that time slots within a burst are shared between the cell subdivisions on the basis of demand.

10. A method of operating a base station of a cell of a cellular radio system having one or more radio frequencies allocated thereto, so that adjacent cells have base stations with different allocated frequencies; the cell being subdivided into at least two sectors, each sector of the cell being provided with separate radio coverage by the allocation of time slots to each sector and characterized in that time slots of a burst of radio communication on one or more of the radio frequencies allocated to the base station of a sectored cell are shared between different sectors of the cell so that time slots can be demand assigned to the sectors.

## Patentansprüche

1. Zellenfunksystem, mit: mehreren Basisstationen, wobei jeder Basisstation eine oder mehrere Funkfrequenzen zugewiesen sind, so daß benachbarte Zellen Basisstationen mit anderen zugewiesenen Frequenzen besitzen; wobei wenigstens eine Zelle in wenigstens zwei Sektoren unterteilt ist, wobei die Basisstation dieser Zelle eine Einrichtung besitzt, die durch die Zuweisung von Zeitschlitzen jedes Bursts der Funkverbindung auf einer oder mehreren der der Basisstation dieser Zelle zugewiesenen Funkfrequenzen an jeden Sektor der Zelle eine andere Funkversorgung bereitstellt, und dadurch gekennzeichnet, daß die Basisstation einer in Sektoren unterteilten Zelle eine Einrichtung besitzt, um die Zeitschlitze zwischen unterschiedlichen Sektoren gemeinsam zu nutzen, so daß die Zeitschlitze auf Anforderung den Sektoren zugewiesen werden können.

2. Zellenfunksystem nach Anspruch 1, bei dem eine Zelle wenigstens zwei Paare von Sektoren besitzt und Einrichtungen vorgesehen sind, die die Zeitschlitze für jedes Paar von Sektoren innerhalb eines zugewiesenen Bursts der Funkverbindung gemeinsam nutzen, so daß jeder Zeitschlitz dem einen oder dem anderen Sektor des Paars dynamisch zugewiesen werden kann.

3. Zellenfunksystem nach Anspruch 1 oder 2, bei dem wenigstens ein Basisstandort vorhanden ist, wo drei Basisstationen vorhanden sind, wovon jede als Zelle eines Paars von Sektoren dient.

4. Zellenfunksystem nach Anspruch 1, 2 oder 3, bei dem ein Frequenzzuweisungs-Wiederholmuster entsprechend einer Gruppierung von drei Basisstandorten beschaffen ist, wovon jeder drei Zellen besitzt, die jeweils ein Paar von Sektoren aufweisen, so daß die verfügbaren Frequenzen neun Zellen mit jeweils zwei Sektoren zugewiesen sind.

5. Zellenfunksystem nach Anspruch 4, bei dem ausgewählten der neun Zellen der Gruppierung von Basisstandorten relativ mehr Frequenzen zugewiesen sind.

6. Zellenfunksystem nach Anspruch 5, mit Einrichtungen für die Ausführung der Gesprächsübergabe, wobei die Gesprächsübergabe-Protokolle des Systems so beschaffen sind, daß die ausgewählten Zellen mit mehr zugewiesenen Frequenzen bei der Handhabung von Gesprächen begünstigt sind.

7. Zellenfunksystem, mit: mehreren Basisstationen, wovon jede einer Zelle dient, die in mehrere Sektoren unterteilt ist; wobei jede Basisstation einen Sender-Empfänger (Fig. 4, 5) für eine Zeitvielfachzugriff-(TDMA)-Verbindung mit mehreren Zeitschlitzen in jedem Burst der Verbindung auf einer oder mehreren der Basisstation zugewiesenen Funkfrequenzen besitzt, wobei eine Basisstation eine Einrichtung aufweist, die mehreren Sektoren ihrer Zelle dient, wobei jeder Sektor eine andere Zuweisung von Zeitschlitzen verwendet, dadurch gekennzeichnet, daß die Basisstation eine Einrichtung aufweist, die den Sender-Empfänger wahlweise freigibt, damit er innerhalb jedes Bursts der TDMA-Kommunikation Sektoren Zeitschlitze zuweist, so daß die Basisstation die Zeitschlitze Sektoren dynamisch zuweisen kann.

8. Zellenfunksystem nach Anspruch 7, bei dem der Sender-Empfänger der Basisstation eine entsprechende Sender-Empfänger-Anordnung (7) für jeden bedienten Sektor besitzt und die Freigabeeinrichtung eine Einrichtung (9) enthält, die wahlweise Zeitschlitze zwischen den Sender-Empfänger-Anordnungen im Basisband umschaltet.

9. Verfahren zum Betreiben einer Basisstation einer Zelle eines Zellenfunksystems, mit: Zuweisen von Bursts der Funkverbindung, wovon jeder mehrere Zeitschlitze enthält, an wenigstens zwei Unterteilungen der Zelle auf einer oder mehreren der Basisstation zugewiesenen Funkfrequenzen, und gekennzeichnet durch die dynamische Zuweisung der Zeitschlitze jedes Bursts der Funkverbindung an die Unterteilungen der Zelle, so daß die Zeitschlitze innerhalb eines Bursts aufgrund einer Anforderung von den Zellen-Unterteilungen gemeinsam genutzt werden.

10. Verfahren zum Betreiben einer Basisstation einer Zelle eines Zellenfunksystems mit einer oder mehreren ihr zugewiesenen Frequenzen, so daß benachbarte Zellen Basisstationen mit anderen zugewiesenen Frequenzen besitzen, wobei die Zelle in wenigstens zwei Sektoren unterteilt ist, wobei für jeden Sektor der Zelle durch die Zuweisung von Zeitschlitzen an jeden Sektor eine andere Funkversorgung bereitgestellt wird, dadurch gekennzeichnet, daß Zeitschlitze eines Bursts der Funkverbindung auf einer oder mehreren der Funkfrequenzen, die der Basisstation einer in Sektoren unterteilten Zelle zugewiesen sind, von verschiedenen Sektoren der Zelle gemeinsam genutzt werden, so daß die Zeitschlitze den Sektoren auf Anforderung zugewiesen werden können.

## Revendications

1. Système radiocellulaire comprenant : une pluralité de stations de base, chaque station de base présentant une ou plusieurs fréquences radio qui lui sont allouées, de façon à ce que des cellules adjacentes comportent des stations de base avec des fréquences allouées différentes, au moins une cellule étant subdivisée en au moins deux secteurs, la station de base de cette cellule comportant des moyens destinés à munir chaque secteur de la cellule d'une couverture radio séparée par l'allocation, à chaque secteur, de tranches de temps de chaque salve de communications radio sur une ou plusieurs des fréquences radio allouées à la station de base de cette cellule, et caractérisé en ce que la station de base d'une cellule sectorisée comporte des moyens destinés à partager les tranches de temps entre différents secteurs, de façon à ce que des tranches de temps puissent être affectées sur demande aux secteurs.

2. Système radiocellulaire selon la revendication 1 dans lequel une cellule présente au moins deux paires de secteurs, comportant des moyens destinés à partager des tranches de temps entre chaque paire de secteurs à l'intérieur d'une salve allouée de communications radio, de sorte que chaque tranche de temps peut être allouée de façon dynamique à un secteur ou à l'autre de la paire.

3. Système radiocellulaire selon la revendication 1 ou la revendication 2 dans lequel il existe au moins un site de base dans lequel se trouvent trois stations de base desservant chacune une cellule d'une paire de secteurs.

4. Système radiocellulaire selon la revendication 1, la revendication 2 ou la revendication 3 dans lequel une séquence de répétitions d'allocations de fréquence est agencée sur la base d'une grappe de trois sites de base comportant chacun trois cellules présentant chacune une paire de secteurs, de sorte que les fréquences disponibles soient allouées parmi neuf cellules de deux secteurs chacune.

5. Système radiocellulaire selon la revendication 4 dans lequel des cellules sélectionnées parmi les neuf cellules de la grappe de sites de base, se voient allouer proportionnellement davantage de fréquences.

6. Système radiocellulaire selon la revendication 5 comportant des moyens destinés à agencer le transfert automatique, les protocoles de transfert automatique du système étant configurés de sorte que les cellules sélectionnées présentant davantage de fréquences allouées, soient favorisées pour la gestion des appels.

7. Système radiocellulaire comprenant : une pluralité de stations de base, chacune desservant une cellule subdivisée en une pluralité de secteurs, chaque station de base comportant un émetteur-récepteur (Figures 4, 5) destiné aux communications à accès multiples par répartition dans le temps (AMRT), une pluralité de tranches de temps dans chaque salve de communications sur une ou plusieurs fréquences radio étant allouée à la station de base, une station de base comportant des moyens destinés à desservir une pluralité de secteurs de sa cellule, chaque secteur utilisant une allocation différente de tranches de temps, caractérisé par le fait que la station de base comporte des moyens destinés à activer de façon sélective l'émetteur-récepteur afin d'allouer des tranches de temps aux secteurs à l'intérieur de chaque salve de communications à accès multiples par répartition dans le temps de façon à ce que la station de base puisse allouer dynamiquement les tranches de temps entre les secteurs.

8. Système radiocellulaire selon la revendication 7 dans lequel l'émetteur-récepteur de ladite station de base comporte un équipement émetteur-récepteur respectif (7) pour chaque secteur qui est desservi, et les moyens d'activation comportent des moyens (9) destinés à commuter les tranches de temps en bandes de base, sélectivement entre les équipements d'émetteur-récepteur.

9. Procédé de mise en oeuvre d'une station de base d'une cellule d'un système radiocellulaire comprenant : l'allocation, sur une ou plusieurs fréquences radio allouées à la station de base, de salves de communications radio, chacune comportant une pluralité de tranches de temps, à au moins deux sous-divisions de la cellule, et caractérisé par le fait d'allouer dynamiquement les tranches de temps de chaque salve de communications radio parmi les sous-divisions de la cellule, de sorte que les tranches de temps à l'intérieur d'une salve soient partagées entre les sous-divisions de cellule à la demande.

10. Procédé de mise en oeuvre d'une station de base d'une cellule d'un système radiocellulaire présentant une ou plusieurs fréquences radio qui lui sont allouées, de façon à ce que des cellules adjacentes comportent des stations de base avec des fréquences allouées différentes, la cellule étant subdivisée en au moins deux secteurs, chaque secteur de la cellule étant muni d'une couverture radio séparée par l'allocation de tranches de temps à chaque secteur et étant caractérisé en ce que les tranches de temps d'une salve de communications radio sur une ou plusieurs des fréquences radio allouées à la station de base d'une cellule sectorisée soient partagées entre différents secteurs de la cellule de sorte que des tranches de temps puissent être affectées sur demande aux secteurs.
